# NEUE EUROPÄISCHE PATENTSCHRIFT

(11) **EP 1 322 458 B2**
(45) Veröffentlichungstag und Bekanntmachung des Hinweises auf die Entscheidung über den Einspruch: **13.05.2015**
(45) Hinweis auf die Patenterteilung: 12.05.2004
(21) Anmeldenummer: 01985686.3
(22) Anmeldetag: 23.09.2001
(51) Int. Cl.: B29C 67/00

(54) **WECHSELBEHÄLTER**
INTERCHANGEABLE CONTAINER
CONTENANT INTERCHANGEABLE

(30) Priorität: 26.09.2000 DE 10047615
(43) Veröffentlichungstag der Anmeldung: 02.07.2003
(73) Patentinhaber: voxeljet AG, 86316 Friedberg (DE)
(72) Erfinder: EDERER, Ingo, 86926 Pflaumdorf (DE); HÖDISMANN, Rainer, 86682 Genderleingen (DE); GRAF, Bernhard, 6911 Diessen am Ammersee (DE); KUDERNATSCH, Alexander, 86163 Augsburg (DE)
(74) Vertreter: Helbig, Christian
(86) Internationale Anmeldenummer: PCT/DE2001/003662
(87) Internationale Veröffentlichungsnummer: WO 2002/026478

(56) Entgegenhaltungen:
- EP-B1- 0 734 842
- DE-A- 19 846 478
- DE-U1- 29 506 204
- DE-U1- 29 701 279
- H.L. MARCUS ET AL.: 'Tagungsband "Solid Freeform Fabriction Proceedings"' September 1993,
- vol. 'Betriebsanleitung EOSINT P350'
- vol. 'Betriebsanleitung EOSINT P360'

## Beschreibung

Die vorliegende Erfindung bezieht sich auf einen Wechselbehälter für eine Vorrichtung zum Aufbau von Modellen, der im wesentlichen einen Begrenzungsrahmen bildet und in den eine Werkstückplattform als Boden einsetzbar ist.

Aus der Praxis sind seit längerer Zeit Vorrichtungen zum Aufbau von Modellen bekannt, wie beispielsweise Laser-Sinter-Maschinen, die ein Maschinengehäuse aufweisen, in dem ein Sinter-Bauraum oder Prozessbauraum angeordnet ist. Im oberen Bereich dieses Bauraumes befindet sich die Ausgangsoptik eines Sinterlasers in Form eines Scanners. Der Scanner bildet dabei das optische System zum Ablenken des Laserstrahls, der die zum Sintern des Sintermaterials erforderliche Energie liefert. Unter diesem optischen System befindet sich eine höhenverfahrbare Werkstückplattform, über der eine Materialzuführungseinrichtung mit einem Beschichter vorgesehen ist, wobei der Beschichter zur Zuführung von pulverartigem Sintermaterial aus einem Vorratsbehälter in dem Prozessbereich über der Werkstückplattform dient.

Mit einer solchen Laser-Sinter-Maschine wird in einem mittleren Bereich der höhenverfahrbaren Werkstückplattform das Bauteil schichtweise aufgebaut. Um aber das pulverartige Sintermaterial, das nicht belichtet und damit nicht gesintert wird, am Herunterfallen von der Werkstückplattform zu hindern, wurde im Randbereich der Plattform bisher im wesentlichen gleichzeitig mit dem eigentlichen Aufbau des Bauteiles ein Rand aufgebaut, das heißt gesintert, der als Begrenzung der Werkstückplattform dient.

Eine derartige Vorgehensweise war in mehrerer Hinsicht mit Nachteilen verbunden, nämlich unter anderem dem, dass der Aufbau des Randes auf der Werkstückplattform zusätzlicher Belichtungszeit bedarf und außerdem zusätzliches und nicht mehr weiterverwendbares Thermoplastpulver erfordert.

Insbesondere nachteilig ist dabei auch, dass bei einem Baufehler im Randbereich keine ausreichend stabile kastenartige Begrenzungsstruktur gebildet wird, was bereits vor oder spätestens beim Entnehmen des Bauteils von der höhenverfahrbaren Werkstückplattform zu Verformungen und damit zum Ausschuss des Bauteiles führen kann.

Darüber hinaus führen Randbrüche oder Randschäden beim Entnehmen der Werkstückplattform aus der Laser-Sintermaschine dazu, dass Pulver den unteren Bereich der Laser-Sintermaschine füllt, diesen Bereich verschmutzt und damit zusätzliche Serviceleistungen und Standzeiten der Laser-Sinter-Maschine verursacht.

Um diese Nachteile bei den aus dem Stand der Technik bekannten Lasermaschinen zu überwinden, ist es aus der deutschen Offenlegungsschrift DE 198 46 478 bekannt, in dem Sinter-Bauraum einen einen Begrenzungsrahmen bildenenden Wechselbehälter einzusetzen, in dem die Werkstückplattform als Boden integriert ist. Ferner ist in dem Sinter-Bauraum eine Trägervorrichtung angeordnet, auf der sich die Werkstückplattform beim Betrieb der Laser-Sintermaschine abstützt. Ein derartiger Wechselbehälter weist damit zum einen einen schachtartigen Außenbereich, der den Begrenzungsrahmen bildet, und zum anderen eine übliche Werkstückplattform auf, die in diesem schachtartigen Bereich höhenverfahrbar integriert ist.

Beim schichtweisen Aufbau des Bauteils wird sukzessive, das heißt Schichthöhe für Schichthöhe, der Behälterboden innerhalb des Begrenzungsrahmens abgesenkt und der über der Werkstückplattform liegende Bereich immer wieder neu mit pulverartigem Sintermaterial ausgefüllt, was in herkömmlicher Art und Weise durch einen Beschichter vorgenommen wird.

Mit einem derartigen Wechselbehälter muss nun beim Aufbau des Bauteiles kein Rand mehr mitaufgebaut werden. Es reicht dabei völlig aus, wenn nur das eigentliche Werkstück gesintert wird, das innerhalb des stabilen Wechselbehälters und dem darin einliegenden nicht gesinterten Sintermaterial verformungsgeschützt gelagert ist.

Außerdem kann der Wechselbehälter als ganzes entnommen werden und ein neuer eingesetzt werden, so dass es nicht notwendig ist abzuwarten, bis das jeweilige Bauteil derart stabil ist, damit es ohne Probleme entnommen werden kann.

Bei einem derartigen Wechselbehälter hat es sich jedoch als nachteilig erwiesen, dass die Handhabung der Werkstückplattform zum Aufbauen von Bauteilen weiterhin relativ aufwendig ist. Soll nämlich die Werkstückplattform beispielsweise nach dem Herstellen eines Modells aus dem Wechselbehälter entfernt werden und durch eine leere Plattform ersetzt werden, muss dies in sehr exakter Art und Weise erfolgen, damit die Plattform wieder exakt in dem Wechselbehälter plaziert und befestigt ist.

Insbesondere als schwierig hat es sich erwiesen, wenn zwischen Werkstückplattform und Wechselbehälter Mittel vorgesehen sind, die eine Dichtung bereitstellen. Dichtungen sind bei der Verwendung von pulverartigem Material beim Aufbauprozess sehr wichtig, da sie beispielsweise eine Höhenverstellung der Werkstückplattform im Wechselbehälter beeinflussen können.

So ist es bekannt, wenn im Wechselbehälter Eingriffsausnehmungen zur Höhenverstellung vorgesehen sind, im Bereich oberhalb der Werkstückplattform diese pulverdicht abzudecken. Derartige Dichtungen müssen aber beim Entnehmen der Werkstückplattform aus dem Wechselbehälter entfernt und dann beim Einbringen einer neuen Werkstückplattform wieder eingesetzt werden.

Es ist daher Aufgabe der vorliegenden Erfindung, einen Wechselbehälter bereitzustellen, mit dem eine Handhabung beim Entnehmen und Einsetzen von Werkstückplattformen erleichtert werden kann.

Diese Aufgabe wird bei einem Wechselbehälter der eingangs genannten Art dadurch gelöst, dass im Wechselbehälter ein Träger vorgesehen ist, auf den die Werkstückplattform aufgelegt ist gemäß Anspruch 1.

Dies bedeutet, dass erfindungsgemäß die dem Wechselbehälter entnehmbare Werkstückplattform beispielsweise einfach nur auf den Träger aufgelegt werden muss, der entsprechend mit dem Wechselbehälter verbunden ist und die Plattform einfach trägt. Die Werkstückplattform muss daher nicht jedesmal nach dem Auswechseln genau in dem Wechselbehälter plaziert und auch befestigt oder verbunden werden.

Es soll betont werden, dass der erfindungsgemäße Wechselbehälter in allen dem Fachmann bekannten Vorrichtungen zum Aufbau von Modellen eingesetzt werden kann. Er ist dabei insbesondere nicht auf den Einsatz bei einem bestimmten Verfahren zum Aufbau von Modellen beschränkt. Er kann in einer Vorrichtung zum selektiven Lasersintern genauso eingesetzt werden wie in einer Vorrichtung zum Aufbau von Gussmodellen aus Formsand, Gießereiharz und Härtern.

Unter dem Ausdruck, dass die Werkstückplattform in den Wechselbehälter als Boden einsetzbar sein soll, ist nicht zu verstehen, dass die Werkstückplattform am Boden des Wechselbehälters angeordnet sein soll oder zumindest dessen untersten Bereich bildet. Vielmehr ist der Begriff Boden hier als eine Art "Regalboden" zu verstehen. Andere "Böden" im Wechselbehälter oder ein besonders ausgestalteter Bodenbereich des Wechselbehälters wird damit nicht ausgeschlossen.

Um den Wechselbehälter jedoch möglichst leicht auszubilden, hat es sich als vorteilhaft erwiesen, wenn der Träger als ein Rahmen ausgebildet ist. Dabei könnte der Rahmen beispielsweise an der Innenwand des Wechselbehälters umlaufend ausgebildet sein. Er könnte aber auch ebenso nur teilweise ausgebildet sein. Erfindungsgemäß sollte er breit genug gebildet sein, damit die Werkstückplattform darauf gesichert aufgelegt werden kann und nicht unter Umständen verkanten kann.

Sind im Wechselbehälter in seinem unteren Bereich noch Streben vorgesehen, kann eine deutlich höhere Steifigkeit der Rahmenkonstruktion des Wechselbehälters erhalten werden. Dabei haben sich insbesondere Querstreben als vorteilhaft erwiesen. Es wäre jedoch auch jede andere Art der Verstrebung denkbar, wie beispielsweise Diagonalstreben.

Die verwendeten Begriffe "oben" und "unten" beziehen sich gemäß den vorliegenden Ausführungen immer auf eine korrekte Betriebsposition des Wechselbehälters. Eine derartige Position ist die, in der er sich beim Aufbau eines Modelles in einer entsprechenden Vorrichtung befindet. Dabei zeigt die im Wechselbehälter eingebrachte Werkstückplattform mit der Seite nach oben, auf die das Modell aufgebaut ist.

Vorzugsweise sollte zumindest der untere Bereich des erfindungsgemäßen Wechselbehälters derartige Ausschnitte aufweisen, damit ein Gabelstapler eingreifen kann und ein Transport mit einem Gabelstapler in einfacher Art und Weise möglich wird.

Ist darüber hinaus an den Seiten des Wechselbehälters mindestens eine Transportöse vorgesehen, kann ein Transport des Wechselbehälters auch in einfacher Art und Weise mittels eines Krans erfolgen.

Um die Steifigkeit des Wechselbehälters noch weiter zu erhöhen, ist der Wechselbehälter vorzugsweise doppelwandig ausgebildet.

Obwohl grundsätzlich der Wechselbehälter und auch die Werkstückplattform jegliche erdenkliche Form in Draufsicht aufweisen können, hat sich aus Gründen der Praktikabilität und der einfachen Herstellbarkeit jedoch eine rechteckige oder quadratische Form als vorteilhaft erwiesen.

Grundsätzlich wäre es möglich, eine Höhenverstellung von unten in den Wechselbehälter eingreifen zu lassen oder auch als festen Bestandteil in dem Wechselbehälter zu integrieren.

Um jedoch stabile Verhältnisse bei Ausnutzung einer in eine entsprechende Vorrichtung fest eingebauten Höhenverstellung zu schaffen, ist es vorteilhaft, wenn im Wechselbehälter im wesentlichen jeweils seitlich, das heißt in zwei sich gegenüberliegenden Seiten, von oben nach unten verlaufende Ausnehmungen zur Höhenverstellung vorgesehen sind.

Dabei umfasst der Wechselbehälter vier zueinander im wesentlichen rechtwinklig angeordnete Seitenwandungen. Innerhalb dieser Seitenwandungen ist die Werkstückplattform höhenverschiebbar geführt.

Vorzugsweise sollten dabei Mittel vorgesehen sein, durch welche die Ausnehmungen im Bereich oberhalb der Werkstückplattform pulverdicht abgedeckt sind. Hierzu kann es vorgesehen sein, dass zumindest im Bereich der Ausnehmungen zwischen einer Wechselbehälterinnenwand und dem Träger eine Dichtung vorgesehen ist.

Dies geschieht vorteilhafterweise durch eine Art Rollo, beispielsweise aus Blech, der an der Oberkante des Wechselbehälters befestigt ist und sich beim Absenken der Werkstückplattform auf die Innenseite der Behälterwandung anlegt und die Ausnehmungen dabei überdeckt.

Damit das Blech nicht zwischen unter Umständen eingreifende Klauen und Werkstückplattform eingeklemmt wird, wird es vorzugsweise in dem Träger der Werkstückplattform mittels entsprechenden Gleitlagern in das Innere des Wechselbehälters geleitet.

Daneben können mit dem Rollo zusammenwirkende Haltemagnetelemente im Wechselbehälter angeordnet sein. Dann schmiegt sich das Rollo durch die Haltemagnete sehr innig an die Innenseite der rückwärtigen Behälterwandung an, so dass kein oder nur wenig Pulver in den unteren Maschinenbereich fallen kann.

Die Ausgestaltung mit einem Haltemagnetelement schränkt die Werkstoffauswahl der Teile des Wechselbehälters ein. Eine weitere, kein Haltemagnetelement verwendende Dichtung zwischen dem Träger und der Wechselbehälterinnenwand stellt eine Filzdichtung dar, die insbesondere, um den nötigen Anpressdruck zu erzielen, noch über Federn belastet werden kann.

Der erfindungsgemäße Wechselbehälter hat sich insbesondere bei der Verwendung in einer Vorrichtung zum Aufbau von Modellen aus Formsand, Gießereiharz und entsprechenden Härten als vorteilhaft erwiesen.

Ebenso ist aber auch ein Einsatz in einer Vorrichtung zum selektiven Laser-Sintern denkbar.

Im folgenden wird die Erfindung anhand einer bevorzugten Ausführungsform mit Bezug auf die anhängende Zeichnung näher erläutert. Es zeigt hierbei:
Figur 1 eine dreidimensionale Ansicht eines Wechselbehälters mit eingesetzter Werkstückplattform in einer geschnittenen Darstellung gemäß einer bevorzugten Ausführungsform der Erfindung;
Figur 2 einen vergrößerten Ausschnitt des Schnittes von Figur 1 in einer Frontalansicht; und
Figur 3 einen noch weiter vergrößerten Ausschnitt der Darstellung von Figur 2.

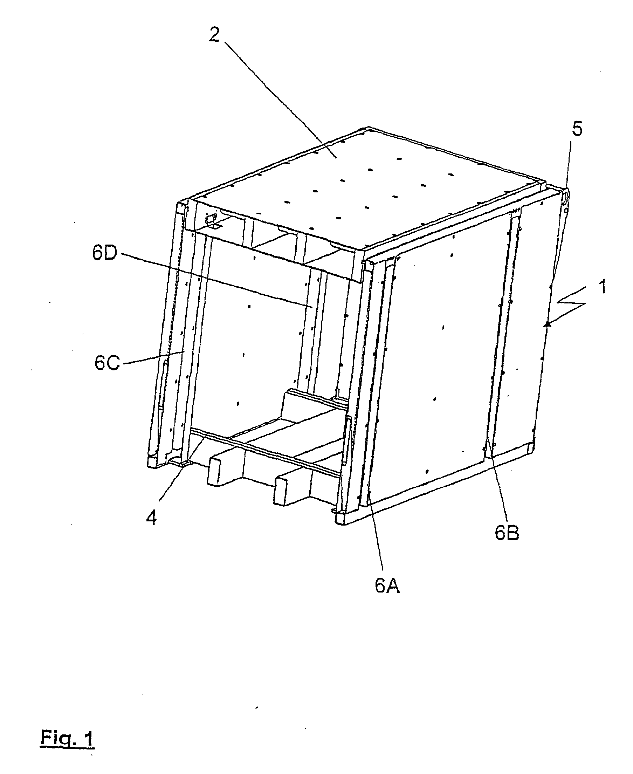

In Figur 1 ist ein Wechselbehälter 1 in einer dreidimensionalen Schnittansicht gezeigt. Das heißt, dass der Wechselbehälter 1 zwar in einer dreidimensionalen Darstellung gezeigt ist, wobei er aufgeschnitten dargestellt ist. Der Wechselbehälter weist insgesamt vier Seitenwände auf, die derart angeordnet sind, dass sie in Draufsicht einen rechteckigen Querschnitt aufweisen.

In diesem Wechselbehälter 1 ist eine Werkstückplattform 2 als ein Boden, nach Art eines Schrank- oder Regalbodens eingesetzt. Diese Werkstückplattform 2 ist selbst wiederum auf einen in der Figur 1 nicht erkennbaren Träger 3 aufgesetzt.

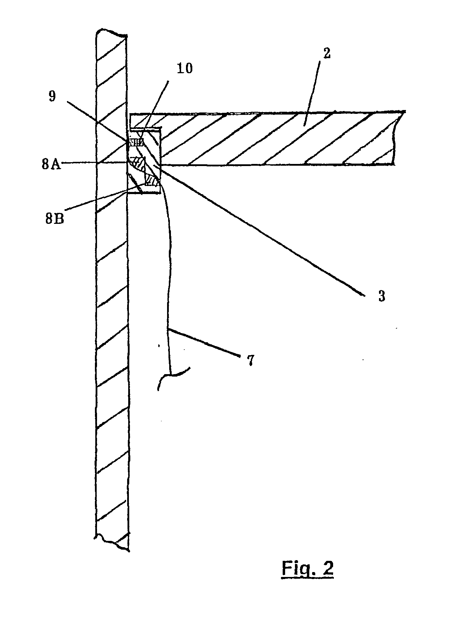

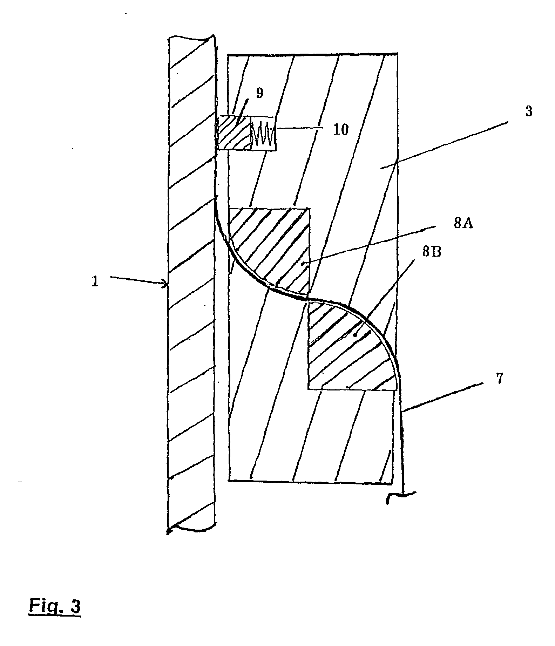

In den Figuren 2 und 3, die die Schnittansicht noch genauer, schematisiert und in einer Frontalansicht darstellen, ist erkennbar, dass der Träger 3 dabei als ein Art Rahmen ausgebildet ist, der im wesentlichen um die Innenwand des Wechselbehälters 1 verläuft.

Wie der Figur 1 weiter zu entnehmen ist, sind am Boden des Wechselbehälters 1 Querstreben 4 vorgesehen, die jeweils die einander gegenüberliegenden Seitenwände des Wechselbehälters 1 miteinander verbinden. Weiterhin ist aus Figur 1 ersichtlich, dass jeweils zwei Querstreben zwischen den Seitenwänden verlaufen. Weiterhin weisen diese Querstreben 4 einen relativ großen Querschnitt auf, was zu einer stark erhöhten Steifigkeit des Wechselbehälters 1 führt.

Um eine noch höhere Steifigkeit des Wechselbehälters 1 zu erreichen, ist gemäß der zweiten bevorzugten Ausführungsform der Wechselbehälter 1 doppelwandig ausgebildet.

Weiterhin sind an zumindest einer Seite des Wechselbehälters 1 eine Transportöse 5 vorgesehen, die einen Transport beispielsweise mittels eines Krans ermöglicht, so dass der Wechselbehälter 1 durch einen Kran beispielsweise in eine Vorrichtung zum Aufbau von Modellen eingesetzt oder einfach über längere Distanzen transportiert werden kann.

Wie insbesondere der Figur 2 entnommen werden kann, ist die in den Wechselbehälter 1 einsetzbare Werkstückplattform 2 im Gegensatz zu aus dem Stand der Technik bekannten Lösungen derart ausgebildet, dass sie auf einem Träger 3, hier einem Rahmen, aufgelegt wird.

Das Höhenverstellen der Werkstückplattform 2 erfolgt über eine Höhenverstellung des Rahmens 3, auf dem die Werkstückplattform 2 aufliegt, so dass eine entsprechende Abdichtung zwischen der Innenwand des Wechselbehälters 1 und dem Rahmen 3 erfolgen muss, damit beim Aufbau von Modellen aus Pulvermaterial dieses nicht in die Höhenverstellung gelangt.

In dem Wechselbehälter 1 sind, wie insbesondere Figur 1 zeigt, Ausnehmungen vorgesehen, die im wesentlichen von oben nach unten verlaufen und zur Höhenverstellung des Rahmens 3 dienen. Bei einer Verwendung des Wechselbehälters 1 für eine Vorrichtung zum Aufbau von Modellen, und zwar insbesondere Gussmodellen, kann der Wechselbehälter 1 derart verwendet werden, dass in die Ausnehmungen 6A, 6B, 6C, 6D von der Vorrichtung Klauen einfahren, die unter die Werkstückplattform 2 eingreifen. Diese Klauen sind selbst wiederum beispielsweise an einer Hubplatte befestigt, die ihrerseits durch Linearführungen und eine Zugspindel an dem jeweiligen Rahmen beziehungsweise dem Gehäuse der Vorrichtung befestigt ist. Zu Beginn eines Bauprozesses wird die Werkstückplattform 2 in ihre oberste Position gefahren und ist dadurch für den Start des Aufbauprozesses bereit.

Zum seitlichen Eingreifen beispielsweise der Klauen in den Wechselbehälter 1 sind in dem Wechselbehälter 1 Ausnehmungen 6A, 6B, 6C, 6D vorgesehen, die vorzugsweise die Behälterwand durchlaufen. Diese Ausnehmungen 6A, 6B, 6C, 6D sollten jedoch möglichst nicht durch von der Werkstückplattorm 2 herabfallenden Sand oder ähnliches verunreinigt werden können. Daher wird vorzugsweise für eine Abdichtung derart gesorgt, dass durch an dem Wechselbehälter 1, insbesondere an seiner Oberkante befestigte, dünne Bleche 7, die sich im Laufe des Aufbauens von Modellen beispielsweise durch den Druck des Formsandes an die Innenseite des Wechselbehälters 1 anlegen und dadurch den Spalt überdecken. Damit diese Bleche 7 nun beim Einsatz in einer oben beschriebenen Vorrichtung nicht zwischen eine Klaue und den Träger beziehungsweise Rahmen 3 eingeklemmt werden, werden sie vorzugsweise in dem Träger 3 mittels entsprechenden Gleitlagern in das Innere des Wechselbehälters 1 geleitet.

Diese Gleitlager können beispielsweise in der Figur 2 und Figur 3 dargestellte Umlenkbahnen 8A, 8B sein.

Das Blech 7 wirkt nun wie eine Art Rollo, der sich beim Absenken der Werkstückplattform 2, beziehungsweise des Rahmens 3 auf die Innenseite der Wand des Wechselbehälters 1 anlegt und daher die Eingriffausnehmung 6A, 6B, 6C, 6D überdeckt.

Um eine noch bessere Dichtung zwischen dem Rahmen 3 und dem Wechselbehälter 1, beziehungsweise insbesondere dessen Innenwand, zu erreichen, ist vorzugsweise in eine seitliche Nut des Rahmens 3 eine weitere Dichtung 9 integriert, die hier gemäß der gezeigten bevorzugten Ausführungsform als Filzdichtung 9 ausgebildet ist. Diese Filzdichtung 9 ist, um einen notwendigen Anpressdruck erzielen zu können, über Federn 10 belastet.

Eine derartige Dichtung 9 kann aufgrund des durch die Feder 10 ausgeübten Anpressdruckes Unebenheiten des Wechselbehälters 1 weitestgehend ausgleichen. Darüber hinaus kann auch durch eine solche Federbelastung auf hochflexible und damit auch immer einhergehende empfindliche Materialien verzichtet werden.

Bei einer derartigen Ausgestaltung des Wechselbehälters 1 ist es vorteilhafterweise möglich, die Werkstückplattform 2 aus dem Wechselbehälter 1 zu entfernen, beispielsweise anzuheben und durch eine leere andere Werkstückplattform 2 zu ersetzen, ohne dass eventuelle entsprechend vorgesehene Dichtungen aus dem Wechselbehälter 1 entfernt werden müssen.

## Patentansprüche

1. Wechselbehälter für eine Vorrichtung zum Aufbau von Modellen, der einen Begrenzungsrahmen bildet und in den eine Werkstückplattform als Boden einsetzbar ist,
**dadurch gekennzeichnet,**
**dass** im Wechselbehälter (1) ein Träger (3) vorgesehen ist, auf den die Werkstückplattform (2) aufgelegt ist und der Träger (3) als Rahmen ausgebildet ist, wobei der Rahmen breit genug gebildet ist, damit die Werstückplattform darauf gesichert aufgelegt werden kann und nicht unter Umständen verkannten kann.

2. Wechselbehälter nach einem der Ansprüche 1 oder 2,
**dadurch gekennzeichnet,**
**dass** in einem Bereich unter der Werkstückplattform (2) des Wechselbehälters (1) Streben (4) vorgesehen sind.

3. Wechselbehälter nach einem der vorhergehenden Ansprüche,
**dadurch gekennzeichnet,**
**dass** der Wechselbehälter (1) derart gestaltet ist, dass ein Gabelstapler eingreifen kann.

4. Wechselbehälter nach einem der vorhergehenden Ansprüche,
**dadurch gekennzeichnet,**
**dass** zumindest in einem oberen Bereich des Wechselbehälters (1) zumindest eine Transportöse (5) vorgesehen ist.

5. Wechsebehälter nach einem der vorhergehenden Ansprüche,
**dadurch gekennzeichnet,**
**dass** er doppelwandig ausgebildet ist.

6. Wechselbehälter nach einem der vorhergehenden Ansprüche,
**dadurch gekennzeichnet,**
**dass** der Träger (3) höhenverstellbar ist.

7. Wechselbehälter nach Anspruch 6,
**dadurch gekennzeichnet,**
**dass** in Seitenwänden im wesentlichen von oben nach unten verlaufende Ausnehmungen (6A, 6B, 6C, 6D) zu einer Höhenverstellung des Trägers (3) vorgesehen sind.

8. Wechselbehälter nach Anspruch 7,
**dadurch gekennzeichnet,**
**dass** zumindest im Bereich der Ausnehmungen (6A, 6B, 6C, 6D) eine Dichtung (7) vorgesehen ist.

9. Wechselbehälter nach Anspruch 8,
**dadurch gekennzeichnet,**
**dass** die Dichtung (7) durch an eine Oberkante des Wechselbehälters (1) befestigte Bleche gebildet ist.

10. Wechselbehälter nach Anspruch 10,
**dadurch gekennzeichnet,**
**dass** die Bleche über am Träger (3) vorgesehene Gleitlager (8A, 8B) in den Wechselbehälter (1) geleitet werden.

11. Wechselbehälter nach einem der vorhergehenden Ansprüche,
**dadurch gekennzeichnet,**
**dass** zwischen dem Träger (3) und der Innenwand des Wechselbehälters (1) eine weitere Dichtung (9), insbesondere eine Filzdichtung, vorgesehen ist.

12. Wechselbehälter nach Anspruch 11,
**dadurch gekennzeichnet,**
**dass** die weitere Dichtung (9) durch mindestens eine Feder (10) belastet ist.

13. Verwendung des Wechselbehälters nach einem der vorhergehenden Ansprüche in einer Vorrichtung zum Aufbau von Modellen aus Formsand, Gießereiharzen und Härtern.

14. Verwendung des Wechselbehälters nach einem der Ansprüche 1 bis 12 in einer Vorrichtung zum Aufbau von Modellen durch Laser-Sintern.

## Claims

1. A job box in a pattern building device, which forms a bounded frame and whose base can be a workpiece platform mounted within the job box,
**characterised in tha**t
the job box (1) is provided with a carrier (3) on which the workpiece platform (2) is mounted and the carrier (3) is constructed as a frame, said frame being provided with a width sufficient to allow secure mounting of the workpiece platform thereon and to prevent the latter from potentially becoming wedged.

2. The job box according to claim 1,
**characterised in that**
braces (4) are arranged underneath the workpiece platform (2) of the job box (1).

3. The job box according to any one of the foregoing claims,
**characterised i n tha**t
the job box (1) is provided with an appropriate access for a forklift.

4. The job box according to any one of the foregoing claims,
**characterised in that**
at least one transport eyelet (5) is provided at least in an upper area of the job box (1).

5. The job box according to any one of the foregoing claims,
**characterised in that**
the job box (1) is arranged with a double-wall construction.

6. The job box according to any one of the foregoing claims,
**characterised in that**
the carrier (3) can be positioned vertically.

7. The job box according to claim 6,
**characterised in that**
the recesses (6A, 6B, 6C, 6D) running essentially top down are provided in the sidewalls for positioning the carrier (3) vertically.

8. The job box according to claim 7,
**characterised in that**
a sealing means (7) is provided at least in the area of the recesses (6A, 6B, 6C, 6D).

9. The job box according to claim 8,
**characterised in that**
the sealing means (7) is formed with metal sheets fastened to an upper edge of the job box (1).

10. The job box according to claim 8,
**characterised in that**
the metal sheets are channelled into the job box (1) by sliding bearings (8A & 8B) provided in the carrier (3).

11. The job box according to any one of the foregoing claims,
**characterised in that**
an additional sealing means (9), particularly a felt seal, is provided between the carrier (3) and the inner wall of the job box (1).

12. The job box according to claim 11,
**characterised in that**
the additional sealing means (9) is loaded through at least one spring means (10).

13. Use of the job box according to one of the foregoing claims in a device for pattern building from moulding sand, casting resins, and curing agents.

14. Use of the job box according to any one of claims 1 to 12 in a device for pattern building with a laser sintering method.

## Revendications

1. Conteneur interchangeable pour un dispositif destiné à constituer des modèles, ledit conteneur formant un cadre de limitation et dans lequel une plateforme pour pièces est inserable comme fond,
**caractérisé en ce que** l'on prévoit, dans ledit conteneur interchangeable (1), un support (3), sur lequel est posée la plateforme pour pièces (2), et le support (3) est dans la forme d'un cadre, ledit cadre étant réalisé de manière à présenter une largeur suffisante, permettant la pose fiable de la plateforme pour pièces sur celui-ci et évitant un calage éventuel.

2. Conteneur interchangeable selon la revendication 1, **caractérisé en ce que** l'on prévoit, dans une région en dessous de la plateforme pour pièces (2) du conteneur interchangeable (1), des entretoises (4).

3. Conteneur interchangeable selon l'une quelconque des revendications précédentes, **caractérisé en ce que** ledit conteneur interchangeable (1) est conformé de sorte qu'un gerbeur à fourche puisse s'engrener dans celui-ci.

4. Conteneur interchangeable selon l'une quelconque des revendications précédentes, **caractérisé en ce que** l'on prévoit, au moins dans une région supérieure dudit conteneur interchangeable (1), un oeillet de transport (5).

5. Conteneur interchangeable selon l'une quelconque des revendications précédentes, **caractérisé en ce qu'**il est constitué à double paroi.

6. Conteneur interchangeable selon l'une quelconque des revendications précédentes, **caractérisé en ce que** le support (3) est réglable en hauteur.

7. Conteneur interchangeable selon la revendication 6, **caractérisé en ce que** l'on prévoit, dans des parois latérales, des creux (6A, 6B, 6C, 6D) s'étendant sensiblement de haut en bas, qui sont destinés à un réglage en hauteur du support (3).

8. Conteneur interchangeable selon la revendication 7, **caractérisé en ce que** l'on prévoit, au moins dans la région des creux (6A, 6B, 6C, 6D), un joint d'étanchéité (7).

9. Conteneur interchangeable selon la revendication 8, **caractérisé en ce que** le joint d'étanchéité (7) est conformé par des tôles attachées à un bord supérieur du conteneur interchangeable (1).

10. Conteneur interchangeable selon la revendication 8, **caractérisé en ce que** les tôles sont guidées vers l'intérieur du conteneur interchangeable (1) par des paliers à glissement (8A, 8B) prévus sur le support (3).

11. Conteneur interchangeable selon l'une des revendications précédentes, **caractérisé en ce que** l'on prévoit, entre le support (3) et la paroi intérieure du conteneur interchangeable (1), un joint d'étanchéité (9) additionnel, en particulier un joint de feutre.

12. Conteneur interchangeable selon la revendication 11, **caractérisé en ce que** le joint d'étanchéité (9) additionnel est chargé par au moins un ressort (10).

13. Utilisation d'un conteneur interchangeable selon l'une des revendications précédentes dans un dispositif destiné à constituer des modèles consistant de sable de moulage, de résines de coulée et de durcisseurs.

14. Utilisation d'un conteneur interchangeable selon l'une des revendications 1 à 12 dans un dispositif destiné à constituer des modèles par frittage laser.
